# EUROPÄISCHE PATENTANMELDUNG

(11) **EP 3 437 773 A1**
(43) Veröffentlichungstag der Anmeldung: **06.02.2019**
(21) Anmeldenummer: 18187212.8
(22) Anmeldetag: 03.08.2018
(51) Int. Cl.: B23B 51/02, B28D 1/14, E21B 10/44

(54) **BOHRER**

(30) Priorität: 03.08.2017 DE 102017117664
(71) Anmelder: DreBo Werkzeugfabrik GmbH, D-88361 Altshausen (DE)
(72) Erfinder: Stumpp, Martin, 88214 Ravensburg (DE); Zürn, Alexander, 88361 Altshausen (DE)
(74) Vertreter: Baronetzky, Klaus

(57) **Zusammenfassung**

Die Erfindung betrifft einen Bohrer mit einer ersten Schneide und einer zweiten Schneide an einem Bohrkopf, insbesondere Vierschneider, mit einer Bohrwendel mit spiralig umlaufenden Stegen, von denen mindestens ein erster spiralig umlaufender Steg und ein zweiter umlaufender Steg in Umfangsrichtung gegeneinander versetzt sind. Eine erste Abfuhrnut in Drehrichtung des Bohrers vor dem ersten Steg und eine zweite Abfuhrnut in Drehrichtung des Bohrers nach dem ersten Steg erstrecken sich spiralig umlaufend. Die radiale Tiefe der Abfuhrnuten ist unterschiedlich zueinander, und insbesondere auch ihr Volumen ist unterschiedlich. Der erste Steg erstreckt sich anschließend an die erste Schneide, und der zweite Steg erstreckt sich anschließend an die zweite Schneide.

## Beschreibung

Die Erfindung betrifft einen Bohrer gemäß dem Oberbegriff von Anspruch 1.

Ein handelsüblicher Spiralbohrer weist in der Regel einen Bohrkopf mit Schneiden, einen an den Bohrkopf angeschlossenen Bohrerkörper mit einer Bohrwendel sowie einen Bohrerschaft auf, der an den Bohrerkörper angeschlossen, im Wesentlichen zylindrisch ist.

Bei Steinbohrern bestehen die Schneiden aus Hartmetall, insbesondere aus Vollhartmetall.

Diese Bohrwendel wird von mindestens einem spiralig umlaufenden Steg und einer spiralig umlaufenden Abfuhrnut gebildet, die sich in Drehrichtung des Bohrers an dem Steg erstreckt. Beim Bohrvorgang wird Bohrmehl durch die Abfuhrnut abgeführt.

Aus der Druckschrift EP 1 405 984 B1 ist ein derartiger Bohrer mit einem Zweischneider am Bohrkopf bekannt, welcher Bohrer eine Mehrzahl von schraubenförmig verlaufenden Stegen und Nuten an dem Bohrerkörper aufweist.

Jedoch sind die dortigen Stege relativ schmal, was während des Bohrvorgangs die Stabilität des Rundlaufs des Bohrers gefährden könnte. Außerdem entsteht beim Bohren aufgrund der starken Vibration des Bohrers ein nicht zu vernachlässigendes Geräusch.

Die Druckschrift DE 198 41 978 C2 offenbart einen Bohrer mit zwei Abfuhrnuten, die zumindest im Bereich des dem Bohrkopf zugewandten Endes des Bohrerschaftes gleiche lichte Querschnitte aufweisen und unter einem Winkel a im Bereich von 130° bis 170° zueinander angeordnet sind. Damit wird beim Bohren eine verbesserte Stabilität im Förderwendelbereich ermöglicht.

Allerdings ist beim Bohrvorgang mit dieser Ausgestaltung die Führung des Bohrers im Bohrloch nicht befriedigend. Darüber hinaus ist mit dem dortigen Bohrer bei einem Armierungstreffer ein Einhaken des Bohrers fast nicht zu vermeiden.

Ferner wird stets versucht, Bohrer zu verbessern, um Bohrvorgänge zu beschleunigen und den Lebenszyklus von Bohrern zu verlängern.

Daher liegt der Erfindung die Aufgabe zugrunde, einen Bohrer gemäß dem Oberbegriff von Anspruch 1 zu schaffen, welcher zumindest teilweise die oben genannten Nachteile behebt, einen langen Lebenszyklus hat und mit welchem zudem ein Bohrvorgang beschleunigt werden kann.

Diese Aufgabe wird erfindungsgemäß durch Anspruch 1 gelöst. Vorteilhafte Weiterbildungen ergeben sich aus den Unteransprüchen.

Erfindungsgemäß ist die radiale Tiefe, insbesondere auch das Volumen, der Bohrmehlabfuhrnuten unterschiedlich zueinander vorgesehen.

Bei einem Bohrvorgang ergeben sich - was die Bohrmehlabfuhr angeht - Reibflächen zwischen Bohrmehl und einer Bohrlochwand und zwischen Bohrmehl und Nutwänden von Bohrmehlabfuhrnuten. Die entsprechende Reibungskraft entgegen der Bohrrichtung führt in an sich bekannter Weise das entstandene Bohrmehl ab.

Mit der erfindungsgemäßen, gegenüber dem Stand der Technik größeren, Tiefe einer Bohrmehlabfuhrnut wird die Reibfläche zwischen dem Bohrmehl und der Nutwand der Bohrmehlabfuhrnut vergrößert. Dies führt dazu, dass die Bohrmehlmitnahme benachbart der Nutenwand der Bohrmehlabfuhrnut verbessert ist.

Überraschend wird zudem noch deutlich mehr Bohrmehl als zu erwartende abgetihrt. Innerhalb der Bohrmehlabfuhrnut ist das Bohrmehl von dem Bohrmehl umgeben, das sich benachbart der Nutwand der Bohrmehlabfuhrnut befindet. Obwohl das der Bohrmehlabfuhrnut und der Nutwand nicht benachbarte Bohrmehl keine Reibfläche mit der Nutwand hat, wird dieses Bohrmehl aufgrund der Reibung mit dem der Nutwand benachbarten Bohrmehl besser abgeführt.

Es ist daher erfindungsgemäß besonders vorteilhaft, dass bei dem Bohrvorgang die Bohrmehlabfuhrnut mit einer gegenüber dem Stand der Technik größeren Tiefe deutlich mehr Bohrmehl abführen kann. Dennoch ist die Stabilität des Rundlaufs des Bohrers nicht beeinträchtigt, so dass die häufig vorkommenden Bohrmehlpfropfen nicht auftreten.

Erfindungsgemäß wird eine größere Bohrmehl-Abführleistung erzielt. Beim Bohren wird insofern eine Verstopfung durch das Bohrmehl vermieden. Dies ermöglichst einen schnelleren Bohrfortschritt.

Zum anderen kann gegenüber dem Stand der Technik aufgrund der erfindungsgemäßen größeren Bohrmehl-Abführleistung die beim Bohren entstandene Wärme beim Bohrkopf schneller durch das Bohrmehl abgeführt werden. Dadurch ist die Verformung bzw. der Verschleiß am Bohrkopf, wenn dieser aus Hartmetall mit einer höheren Temperatur zum Einsatz kommt, geringer. Dies führt zu einer längeren Lebensdauer des Bohrers.

Der erste Steg des erfindungsgemäßen Bohrers erstreckt sich anschließend an die erste Schneide, und der zweite Steg erstreckt sich anschließend an die zweite Schneide. Mit dieser Ausgestaltung lässt sich die Schlagenergie aus der Bohrmaschine über die Stege des Bohrers möglichst vollständig zu den sich anschließenden Schneiden übertragen.

In einer bevorzugten Ausführungsform ist es vorgesehen, dass der erste Steg - insbesondere in tangentialer Richtung betrachtet - breiter als der zweite Steg ist, und dass die erste Schneide tangential breiter als die zweite Scheide ist. Es ist besonders vorteilhaft, dass im Vergleich zur dünneren zweiten Scheide mehr Schlagenergie über den breiteren ersten Steg des Bohrers zu der sich anschließenden breiteren ersten Schneide geführt wird.

Der Bohrer wirkt quasi als Zweischneider, da die Reibung des zweiten Stegs und die die Schlagenergie absorbierende Wirkung der zweiten Schneide aufgrund deren bestehenden Dünnheit recht gering ist. Dadurch ist der Bohrfortschritt weiter erhöht.

Außerdem wird erfindungsgemäß mit dem dünneren zweiten Steg die beim Bohren notwendige Stabilität des Bohrers aufrechterhalten.

In einer weiteren bevorzugten Ausführungsform ist es vorgesehen, dass der ersten Schneide und dem ersten Steg nachlaufend eine tangential breitere Bohrmehlabfuhrnut ausgebildet ist als der zweiten Schneide und dem zweiten Steg nachlaufend. Erfindungsgemäß wird das Volumen einer Bohrmehlabfuhrnut des Bohrers nicht nur durch ihre größere Tiefe, sondern auch durch ihre größere Breite erhöht.

Insbesondere, wenn die Bohrmehlabfuhrnut der breiteren ersten Scheide und dem breiteren ersten Steg nachlaufend angeordnet ist, ist beim Bohren wegen des großen Volumens der Abfuhrnut das gerade in großer Menge entstandene Bohrmehl, das durch die vorspringende erste Schneide abgetragen wurde, unproblematisch abzuführen.

In einer weiteren bevorzugten Ausführungsform ist es vorgesehen, dass der ersten Schneide und dem ersten Steg vorlaufend eine tangential breitere Bohrmehrabfuhrnut ausgebildet ist als der zweiten Schneide und dem zweiten Steg vorlaufend. Da die tangential breitere Bohrmehlabfuhrnut mehr Bohrmehl abführen kann, erlaubt dies die Abführung von möglichst viel Bohrmehl vor dem nächsten Schneiden durch die breitere erste Schneide. Die breitere und gegenüber der zweiten Schneide vorragende erste Scheide trägt insofern primär zum Bohrfortschritt bei. Das entstehende Bohrmehl wird durch die folgende erste Bohrmehlabfuhrnut abgeführt. Dadurch wird die Bohreffizienz erhöht.

In einer weiteren bevorzugten Ausführungsform ist es vorgesehen, dass die erste Schneide in an sich bekannter Weise radial und/oder axial gegenüber der zweiten Schneide vorspringt. Dadurch übernimmt die erste Schneide die Hauptabtragsleistung und ist somit stärker belastet als die zweite Schneide. Der Bohrer wirkt beim Bohren in diesem Fall als Zweischneider, während die zweite Schneide den Bohrer führt. Dadurch wird eine große Bohrleistung und ein stabilerer Bohrvorgang gewährleistet.

In einer weiteren bevorzugten Ausführungsform ist es vorgesehen, dass der Anschluss der Stege an die betreffenden Schneiden, also des ersten Stegs an die erste Schneide und des zweiten Stegs an die zweite Schneide, in gleicher Weise dergestalt ausgebildet ist, dass die sich zwischen den Schneiden erstreckenden Nuten zunächst achsparallel verlaufen und dann bei insbesondere gleichem Querschnittsvolumen abrupt oder mit einem sanften Übergang in die betreffenden Bohrmehlabfuhrnuten übergehen.

Die sich zunächst achsparallel erstreckenden Nuten am Bohrkopf stellen erfindungsgemäß zusammen mit den Stegen die Führung des Bohrers sicher.

Der Übergang der Nuten zu den jeweiligen Bohrmehlabfuhrnuten kann erfindungsgemäß abrupt sein. Dadurch wird eine gegenüber dem Stand der Technik verbesserte

Förderleistung von Bohrmehl ermöglicht, da bereits vom Übergang an durch spiralig umlaufende Abfuhrnuten das Bohrmehl abgeführt werden kann.

Alternativ kann der Übergang erfindungsgemäß sanft sein. Damit wird die Übertragung der Schlagenergie über die Stege mit einem möglichst geringen Verlust zu den Schneiden ermöglicht.

In einer weiteren bevorzugten Ausführungsform ist es vorgesehen, dass die dem ersten Steg nachlaufende Bohrmehlabfuhrnut radial tiefer als die dem zweiten Steg nachlaufende Bohrmehlabfuhrnut ist. Damit hat die dem ersten Steg nachlaufende Bohrmehlabfuhrnut eine höhere Bohrmehlabfuhrleistung als die dem zweiten Steg nachlaufende Bohrmehlabfuhrnut.

Dies ist besonders vorteilhaft, wenn die erste Schneide breiter als die zweite Schneide ist. Denn beim Bohren kann wegen des großen Volumens der dem ersten Steg nachlaufenden Abfuhrnut das dort in großer Menge entstandene Bohrmehl, das durch die breitere erste Schneide abgetragen wurde, unproblematisch abgeführt werden.

In einer weiteren bevorzugten Ausführungsform ist es vorgesehen, dass die dem ersten Steg vorlaufende Bohrmehlabfuhrnut radial tiefer als die dem zweiten Steg vorlaufende Bohrmehlabfuhrnut ist.

Da die tangential tiefere Bohrmehlabfuhrnut mehr Bohrmehl abführen kann, erlaubt dies die Abführung von möglichst viel Bohrmehl vor dem nächsten Schneiden durch die breitere erste Schneide. Die breitere und gegenüber der zweiten Schneide vorragende erste Scheide trägt insofern primär zum Bohrfortschritt bei. Das entstehende Bohrmehl wird durch die folgende erste Bohrmehlabfuhrnut abgeführt. Dadurch wird die Bohreffizienz erhöht.

In einer weiteren bevorzugten Ausführungsform ist es vorgesehen, dass ein Bohrerkern zur Ausbildung der Bohrwendel, von dem sich die Stege radial nach außen wegerstecken, einen ovalen oder elliptischen Querschnitt aufweist. Da die Bohrmehlabfuhrnuten die Kontur des Querschnitts des im Wesentlichen zylindrischen Bohrerkerns bilden und erfindungsgemäß unterschiedliche Tiefen aufweisen, ergibt sich bei einem Vierschneider ein ovaler oder elliptischer Querschnitt des Bohrerkerns.

In einer weiteren bevorzugten Ausführungsform ist es vorgesehen, dass der erste Steg eine größere radiale Höhe als der zweite Steg hat, insbesondere um 30 bis 70 Prozent, wobei das Höhenverhältnis besonders bevorzugt etwa 5 zu 3 beträgt. Dadurch ergibt sich bei dem zweiten Steg nur eine kleinere Tragfläche für das zu transportierende Bohrmehl, damit die an dem zweiten Steg benachbart angeordneten Abfuhrnuten quasi eine größere gemeinsame Abfuhrnut bilden. Dies führt zu einer weiter verbesserten Bohrmehlabfuhrleistung.

In einer weiteren bevorzugten Ausführungsform ist es vorgesehen, dass die Stege an den als Hartmetallkörper ausgebildeten und insbesondere hartgelöteteten Schneiden parallel zur Bohrerachse verlaufen und dort einen Schneidenhaltebereich ausbilden. Der Schneidenhaltebereich ist insbesondere bei dem zweiten Steg dünner als beim ersten Steg, so dass ein sanfter Übergang von der breiteren ersten Schneide zum breiteren ersten Steg und von der schmaleren zweiten Schneide zum schmaleren zweiten Steg realisiert wird.

In einer weiteren bevorzugten Ausführungsform ist es vorgesehen, dass die Stege - in der Richtung gegenüber der Bohrrichtung betrachtet - nach dem Schneidenhaltebereich keinen parallel zur Bohrerachse verlaufenden Abschnitt aufweisen, sondern gleich gewendelt ausgebildet sind. Dadurch wird die Förderleistung von Bohrmehl weiter erhöht.

Weitere Vorteile, Einzelheiten und Merkmale ergeben sich aus der nachfolgenden Beschreibung von Ausführungsbeispielen der Erfindung anhand der Zeichnungen.

Es zeigen:
- Fig. 1a: eine schematisch dargestellte Ausführungsform des erfindungsgemäßen Bohrers in Seitenansicht;
- Fig. 1b: die Ausführungsform des erfindungsgemäßen Bohrers gemäß Fig. 1a in Seitenansicht senkrecht zur Seitenansicht gemäß Fig. 1a;
- Fig. 1c: einen Teil des Bohrerkörpers der Ausführungsform des erfindungsgemäßen Bohrers gemäß Fig. 1a im Längsschnitt;
- Fig. 1d: die perspektivisch dargestelle Ausführungsform des erfindungsgemäßen Bohrers gemäß Fig. 1a;
- Fig. 2a: eine weitere schematisch dargestellte Ausführungsform des erfindungsgemäßen Bohrers in Seitenansicht;
- Fig. 2b: die Ausführungsform des erfindungsgemäßen Bohrers gemäß Fig. 2a in Seitenansicht senkrecht zur Seitenansicht gemäß Fig. 2a;
- Fig. 2c: einen Teil des Bohrerkörpers der Ausführungsform des erfindungsgemäßen Bohrers gemäß Fig. 2a im Längsschnitt;
- Fig. 2d: die perspektivisch dargestellte Ausführungsform des erfindungsgemäßen Bohrers gemäß Fig. 2a;
- Fig. 2e: eine Schnittansicht durch diese Ausführungsform im Bereich der Bohrerwendel;
- Fig. 3: die Stirnseite des Bohrkopfs einer weiteren schematisch dargestellten Ausführungsform des erfindungsgemäßen Bohrers; und
- Fig. 4: den Bohrkopf und einen Teil des Bohrerkörpers einer weiteren perspektivisch dargestellen Ausführungsform des erfindungsgemäßen Bohrers.

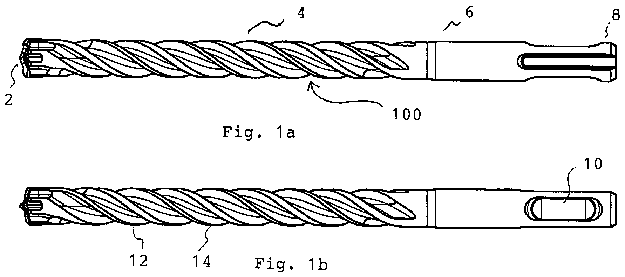

Die in Fig. 1a dargestellte Ausführungsform des erfindungsgemäßen Bohrers 100 weist einen geschlitzten Bohrkopf 2, einen Bohrerkörper 4 mit einer Bohrwendel und einen Bohrerschaft 6 auf. Der Bohrkopf 2 ist in an sich bekannter Weise an den Bohrerlörper 4 angeschlossen, der weiter an den Bohrerschaft 6 angeschlossen ist. Der Bohrerschaft 6 weist zum Antrieb durch eine Bohrmaschine im Umfangrichtung zwei DrehmitnahmeNuten 8 und zwei gegenüberliegende Vertiefungen 10 (s. Fig. 1b) auf.

Die Bohrwendel weist einen ersten spiralig umlaufenden Steg 12 und einen zweiten spiralig umlaufenden Steg 14 auf, die in Umfangrichtung gegeneinander versetzt sind.

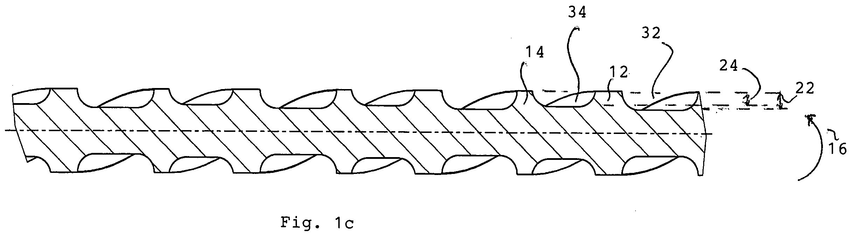

Aus Fig. 1c ist ersichtlich, dass der erste Steg 12 - in tangentialer Richtung betrachtet - breiter als der zweite Steg 14 ist. Die Rotationsrichtung des Bohrers 100 ist in Fig. 1c mit dem Bezugszeichen 16 bezeichnet. Dem breiteren ersten Steg 12 nachlaufend ist eine erste Bohrmehlabfuhrnut 32 ausgebildet, die sich spiralig umlaufend erstreckt und tangential breiter als eine zweite Bohrmehlabfuhrnut 34 ist, die sich ebenfalls spiralig umlaufend erstreckt und dem dünneren zweiten Steg 14 nachfolgend ausgebildet ist. Erfindungsgemäß ist die Tiefe 22 der ersten Bohrmehlabfuhrnut 32 größer als die Tiefe 24 der zweiten Bohrmehlabfuhrnut 34. Bei dem Bohrvorgang kann damit die erste Bohrmehlabfuhrnut 32 mit einer größeren Tiefe 22 mehr Bohrmehl als die zweite Bohrmehlabfuhrnut 34 abführen. Dadurch ist beim Bohren die Verstopfungsneigung durch das Bohrmehl deutlich geringer. Dies führt erfindungsgemäß zu einem schnelleren Bohrfortschritt.

Aufgrund der erfindungsgemäßen größeren Bohrmehl-Abführleistung kann die beim Bohren entstandene Wärme beim Bohrkopf 2 schneller durch das Bohrmehl abgeführt werden. Dadurch wird die Verformung bzw. der Verschleiß am Bohrkopf 2, welche oder welcher beim Bohren bei einer höheren Temperatur stattfindet, vermieden. Dies führt zu einer längeren Lebensdauer des Bohrers 100.

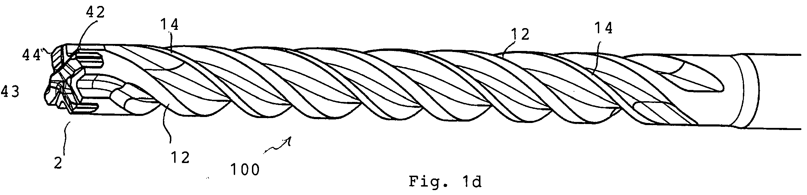

Gemäß Fig. 1d weist der Bohrkopf 2 eine erste Schneide 42 und eine zweite Schneide 44 auf. Die erste Schneide 42 ist tangential breiter als die zweite Schneide 44. Der breitere erste Steg 12 erstreckt sich anschließend an die breitere erste Schneide 42, und der dünnere zweite Steg 14 erstreckt sich anschließend an die dünnere zweite Schneide 44.

Erfindungsgemäß ist es besonders vorteilhaft, dass im Vergleich zur dünneren zweiten Scheide 44 mehr Schlagernergie von der Bohrmaschine über den breiteren ersten Steg 12 zu der breiteren ersten Schneide 42 geführt wird.

Die Platte 43 aus Hartmetall wurde bei der Herstellung des Bohrers zur Bildung des Bohrkopfs 2 in an sich bekannter Weise in Nuten eingesetzt und dort hartgeötet.

Die breitere erste Schneide 42 springt gemäß Fig. 1d gegenüber der dünneren zweiten Schneide 44 axial vor. Dadurch übernimmt die breitere erste Schneide 42 die Hauptabtragsleistung und ist somit stärker belastet als die dünnere zweite Schneide 44. Mit der axial vorspringenden und breiteren ersten Schneide 42 wird erfindungsgemäß der Bohrfortschritt weiter beschleunigt, da der Bohrer 100 hinsichtlich der Bohrleistung wie ein Zweischneider wirkt, der eine bessere Bohrleistung hat.

Mit dem dünneren zweiten Steg 14 wird erfindungsgemäß der Rundlauf im Vergleich mit einem Zweischneider verbessert.

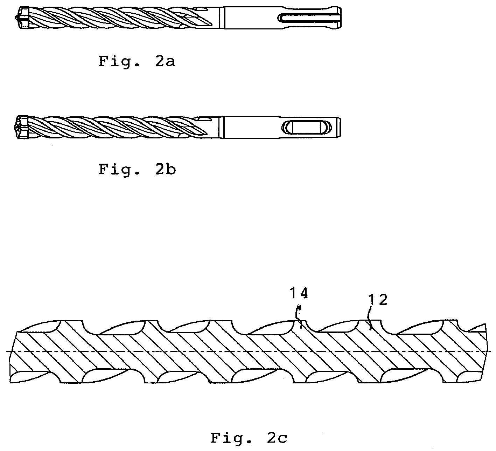

Die Ausführungsform des erfindungsgemäßen Bohrers 100 gemäß Fig. 2a bis 2d unterscheidet sich von derjenigen gemäß Fig. 1a bis 1d darin, dass der Bohrkopf 2 der

Ausführungsform gemäß Fig. 2a bis 2d im Wesentlichen bzw. komplett aus Hartmetall besteht.

Aufgrund der Materialeigenschaft des Bohrers 2 dieser Ausführungsform liegen die Vorteile in kürzeren Bearbeitungszeiten und höherer Standzeit. Dies ergibt sich besonders bei der Bearbeitung von abrasiven Werkstoffen wie Gusseisen, Aluminiumlegierungen mit hohem Siliziumanteil, glasfaserverstärkten Werkstoffen und Graphit.

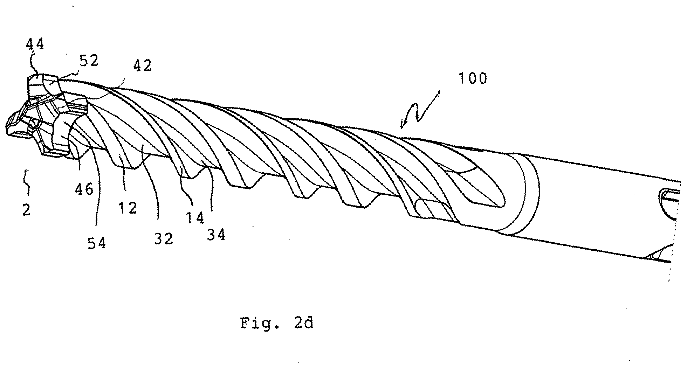

Gemäß Fig. 2d verlaufen die Stege 12 und 14 an den als Vollhartmetallkörper ausgebildeten Schneiden 42 und 44 parallel zur Bohrerachse und bilden dort einen Schneidenbereich 46 aus.

Der Schneidenbereich 46 ist bei dem dünneren zweiten Steg 44 dünner als beim breiteren ersten Steg 42, so dass ein sanfter Übergang von der breiteren ersten Schneide 42 zum breiteren ersten Steg 12 und von der dünneren zweiten Schneide 44 zum dünneren zweiten Steg 14 realisiert wird.

Die Schneiden 42 und 44 erstrecken sich - in axialer Richtung betrachtet - im Wesentlichen X-förmig. Die sich zwischen diesen ergebenden Nuten 52 und 54 gehen bündig in die betreffenden Bohrmehlabfuhrnuten über.

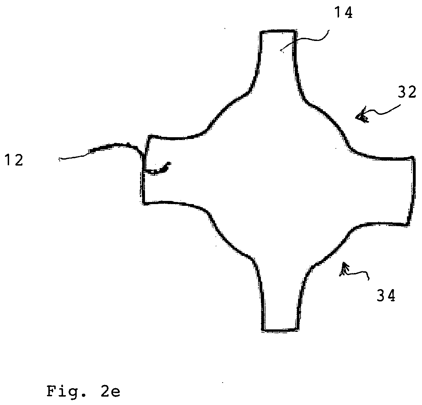

Gemäß Fig. 2e ist die Breite und die Tiefe der ersten Bohrmehlabführnut 32, die dem ersten Steg 12 nachläuft, größer als die Breite und die Tiefe der zweiten Bohrmehlabführnut 34.

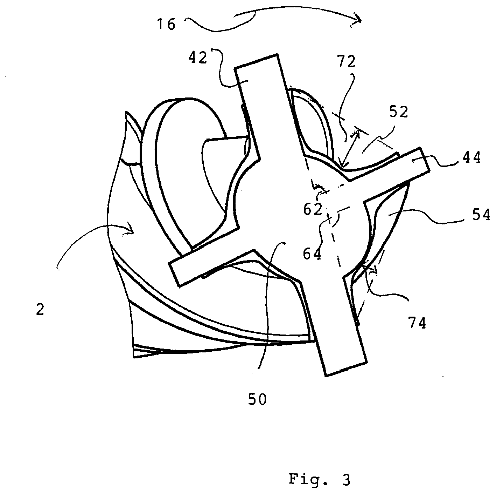

Bei dem gemäß Fig. 3 dargestellten Bohrkopf 2 beträgt der Winkel 62, der oben rechts von den Schneiden 42 und 44 gebildet ist, ca. 100. Dementsprechend beträgt der unten rechts von diesen gebildete Winkel 64 ca. 80°. Mit dieser Ausgestaltung ist die der breiteren Schneide 42 nachlaufende Nut 52 breiter als die der dünneren Schneide 44 nachlaufende Nut 54.

Außerdem ist die Tiefe 72 der Nut 52 größer als die Tiefe 74 der Nut 54. Damit ist das Volumen der Nut 52 im Vergleich zu der Nut 54 weiter vergrößert.

In diesem Fall kann erfindungsgemäß die Nut 52, die sich der Hauptabtragleistung generierenden breiteren ersten Schneide 42 nachfolgend befindet und an die breitere erste Bohrmehlabfuhrnut 32 angeschlossen ist, mehr Bohrmehl über die erste Bohrmehlabfuhrnut 32 abführen. Ein Häufen von Bohrmehl in der Nut 52 wird damit vermieden.

Da die Nuten 52 und 54 bzw. die Bohrmehlabfuhrnuten 32 und 34 die Kontur des Querschnitts des im Wesentlichen zylindrischen Bohrerkerns bilden und erfindungsgemäß unterschiedliche Tiefen 72 und 74 bzw. 22 und 24 aufweisen, ergibt sich bei dem erfindungsgemäßen Bohrer 100 ein ovaler oder elliptischer Querschnitt 50 des Bohrerkerns.

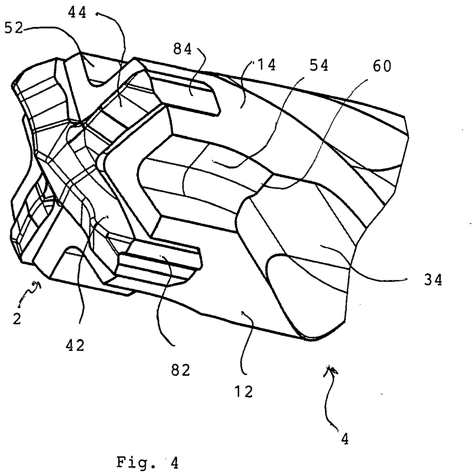

Gemäß Fig. 4 ist der Anschluss 82, 84 der Stege 12, 14 an die betreffenden Schneiden 42, 44, also des ersten Stegs 12 an die erste Schneide 42 und des zweiten Stegs 14 an die zweite Schneide 44, in gleicher Weise wie folgt ausgebildet: Die sich zwischen den Schneiden 42, 44 erstreckenden Nuten 52, 54 verlaufen zunächst achsparallel und gehen dann abrupt in die betreffenden Bohrmehlabfuhrnuten 32, 34 über. Der abrupte Übergang 60 zwischen der Nute 54 und der Bohrmehlabfuhrnut 34 ist aus Fig. 4 ersichtlich. Dieser erlaubt eine verbesserte Förderleistung von Bohrmehl, da bereits vom Übergang 60 an das Bohrmehl durch die spiralig umlaufende Abfuhrnut 34 abgeführt werden kann.

Darüber hinaus ist mit einem abrupten Übergang die Herstellung des Bohrers 100 leichter. Ein Rohling als Bohrerkörper wird bei der Herstellung zunächst zur Bildung der Bohrwendel gefräst oder gewirbelt und dann an der Stelle des oben genannten Übergangs abgelängt. Dadurch kann der Rohling für beliebige Bohrerlänge verwendet werden.

Alternativ kann der Übergang 60 sanft sein. Damit wird die Schlagenergie über die Stege 12 und 14 mit einem möglichst geringen Verlust zu den Schneiden 42 und 44 übertragen.

## Patentansprüche

1. Bohrer mit einer ersten Schneide (42) und einer zweiten Schneide (44) an einem Bohrkopf (2), insbesondere Vierschneider, mit einer Bohrwendel mit spiralig umlaufenden Stegen (12, 14), von denen mindestens ein erster spiralig umlaufender Steg (12) und ein zweiter umlaufender Steg (14) in Umfangsrichtung gegeneinander versetzt sind, und wobei sich eine erste Abfuhrnut (32) in Drehrichtung des Bohrers (100) vor dem ersten Steg (12) und eine zweite Abfuhrnut (34) in Drehrichtung des Bohrers (100) nach dem ersten Steg (12) spiralig umlaufend erstrecken, **dadurch gekennzeichnet, dass** die radiale Tiefe (22, 24) der Abfuhrnuten (32, 34) unterschiedlich zueinander ist und insbesondere auch ihr Volumen unterschiedlich ist, und der erste Steg (12) sich anschließend an die erste Schneide (42) und der zweite Steg (14) sich anschließend an die zweite Schneide (44) erstreckt.

2. Bohrer nach Anspruch 1, **dadurch gekennzeichnet, dass** der erste Steg (12) - insbesondere in tangentialer Richtung betrachtet - breiter als der zweite Steg (14) ist, und dass die erste Schneide (42) tangential breiter als die zweite Scheide (44) ist.

3. Bohrer nach Anspruch 1 oder 2, **dadurch gekennzeichnet, dass** der ersten Schneide (42) und dem ersten Steg (12) nachlaufend eine tangential breitere Bohrmehlabfuhrnut (32) ausgebildet ist als der zweiten Schneide (44) und dem zweiten Steg (14) nachlaufend.

4. Bohrer nach Anspruch 1 oder 2, **dadurch gekennzeichnet, dass** der ersten Schneide (42) und dem ersten Steg (12) vorlaufend eine tangential breitere Bohrmehrabfuhrnut (32) ausgebildet ist als der zweiten Schneide (44) und dem zweiten Steg (14) vorlaufend.

5. Bohrer nach einem der vorhergehenden Ansprüche, **dadurch gekennzeichnet, dass** die erste Schneide (42) in an sich bekannter Weise radial und/oder axial gegenüber der zweiten Schneide (44) vorspringt.

6. Bohrer nach einem der vorhergehenden Ansprüche, **dadurch gekennzeichnet, dass** der Anschluss der Stege (12, 14) an die betreffenden Schneiden (42, 44), also des ersten Stegs (12) an die erste Schneide (42) und des zweiten Stegs (14) an die zweite Schneide (44) in gleicher Weise dergestalt ausgebildet ist, dass die sich zwischen den Schneiden (42, 44) erstreckenden Nuten (52, 54) zunächst achsparallel verlaufen und dann bei insbesondere gleichem Querschnittsvolumen abrupt oder mit einem sanften Übergang (60) in die betreffenden Bohrmehlabfuhrnuten (32, 34) übergehen.

7. Bohrer nach einem der vorhergehenden Ansprüche, **dadurch gekennzeichnet, dass** die dem ersten Steg (12) nachlaufende Bohrmehlabfuhrnut (32) radial tiefer als die dem zweiten Steg (14) nachlaufende Bohrmehlabfuhrnut (34) ist.

8. Bohrer nach einem der Ansprüche 1 bis 6, **dadurch gekennzeichnet, dass** die dem ersten Steg (12) vorlaufende Bohrmehlabfuhrnut (34) radial tiefer als die dem zweiten Steg (14) vorlaufende Bohrmehlabfuhrnut (32) ist.

9. Bohrer nach einem der vorhergehenden Ansprüche, **dadurch gekennzeichnet, dass** ein Bohrerkern zur Ausbildung der Bohrwendel, von dem sich die Stege (12, 14) radial nach außen wegerstecken, einen ovalen oder elliptischen Querschnitt aufweist.

10. Bohrer nach einem der vorhergehenden Ansprüche, **dadurch gekennzeichnet, dass** der erste Steg (12) eine größere radiale Höhe als der zweite Steg (14) hat, insbesondere um 30 bis 70 Prozent, wobei das Höhenverhältnis besonders bevorzugt etwa 5 zu 3 beträgt.

11. Bohrer nach einem der vorhergehenden Ansprüche, **dadurch gekennzeichnet, dass** die Stege (12, 14) neben den als Hartmetallkörper ausgebildeten und insbesondere hartgelöteteten Schneiden (42, 44) parallel zur Bohrerachse verlaufen und dort einen Schneidenhaltebereich ausbilden, der insbesondere bei dem zweiten Steg (14) dünner als beim ersten Steg (12) ist.

12. Bohrer nach einem der vorhergehenden Ansprüche, **dadurch gekennzeichnet, dass** die erste Schneide (42) und die zweite Schneide (44) an je einem oder einem gemeinsamen Hartmetallelement ausgebildet sind, und dass das Hartmetallelement der ersten Schneide (42) eine größere tangentiale Breite aufweist als das der zweiten Schneide (44), und/oder dass die erste Schneide (42) gegenüber der zweiten Schneide (44) nach vorne vorragt.

13. Bohrer nach Anspruch 11 oder 12, **dadurch gekennzeichnet, dass** die Stege - in der Richtung der Bohrerachse betrachtet - an den Schneidenhaltebereich oder einen Vollhartmetallkopf unmittelbar anschließend gewendelt ausgebildet sind und keinen parallel zur Bohrerachse verlaufenden Abschnitt aufweisen.

14. Bohrer nach einem der vorhergehenden Ansprüche, **dadurch gekennzeichnet, dass** die erste Schneide (42) und die zweite Schneide (44) an einem Vollhartmetallkopf (2) ausgebildet ist, wobei die Schneiden (42, 44) sich in axialer Richtung betrachtet im Wesentlichen X-förmig erstrecken und wobei die sich zwischen diesen ergebenen Nuten (52, 54) bündig in die betreffenden Bohrmehlabfuhrnuten (32, 34) übergehen.
